# EUROPEAN PATENT APPLICATION

(11) **EP 0 950 806 A2**
(43) Date of publication of application: **20.10.1999**
(21) Application number: 99102409.2
(22) Date of filing: 08.02.1999
(51) Int. Cl.: F02D 41/38, F02D 11/10, F02D 33/00

(54) **Method and device for controlling intake throttle valve of diesel engine**

(30) Priority: 16.04.1998 JP 10665198
(71) Applicant: TOYOTA JIDOSHA KABUSHIKI KAISHA, Aichi-ken 471-8571 (JP)
(72) Inventor: Itoh, Yoshiyasu, c/o Toyota Jidosha K.K., Toyota-shi, Aichi-ken 471-8571 (JP)
(74) Representative: Pellmann, Hans-Bernd, Dipl.-Ing.

(57) **Abstract**

In controlling an intake throttle valve of a diesel engine, the intake throttle valve (4) is driven to be opened and closed by an electronic control unit (19) by means of step control that is performed based on a predetermined step position of a step motor (40) drivingly coupled to the intake throttle valve (4) of the diesel engine (1). When the fuel injection amount command value, which is set based on the opening degree of an accelerator of the diesel engine 1, becomes equal to or smaller than 0, the electronic control unit (19) sets the target opening degree of the intake throttle valve (4) to a value that is still closer to a valve-closing side than the target opening degree set during the idling of the engine (1).

## Description

### BACKGROUND OF THE INVENTION

### 1. Field of the Invention

The present invention relates to a method and a device for controlling an intake throttle valve that is provided in an intake passage of a diesel engine and driven to be opened and closed by a step motor.

### 2. Description of the Related Art

Fuel injection amount control plays a leading role in controlling outputs of a diesel engine. Conventionally, therefore, it has been considered unnecessary to control the amount of intake air with high precision. However, in order to satisfy a recently growing demand for an improvement in emission performance, the necessity of ensuring a large amount of exhaust gas recirculation (hereinafter referred to as "EGR") by means of an EGR mechanism has been universally recognised. In order to ensure a large amount of EGR, the amount of intake air introduced into the diesel engine needs to be controlled finely. With a view to finely controlling the amount of intake air, an intake throttle valve device capable of controlling the opening degree of the intake throttle valve with high precision independently of an accelerator pedal has been eagerly awaited.

Conventionally, for example, Japanese Utility Model Publication Laid-Open No. SHOU 61-20268 discloses a device intended to meet such a demand. The device disclosed in this publication is able to independently control the opening degree of the intake throttle valve by means of a reversible motor and has been put to practical use. A device that controls the opening degree of the intake throttle valve with much higher precision by employing a step motor as the reversible motor has also been put to practical use.

In general, when a diesel engine is in a process of deceleration, fuel injection is suspended so as to improve fuel consumption. This is what is called fuel cut. Such fuel cut makes it possible to effectively lower the rotational speed of the diesel engine without controlling the amount of intake air. However, a malfunction in the fuel injection system, the inclusion of oil in intake air and the like maintain a combustion state and thereby causes a stagnation or even a rise in rotational speed of the engine contrary to the driver's intention. By setting the opening degree of the intake throttle valve to a small value, the device disclosed in the aforementioned publication succeeds in obviating such inconveniences to a certain extent. Despite a small opening degree of the intake throttle valve, as long as air flows into a combustion chamber, the engine is maintained in a combustion state corresponding to the amount of fuel. It is therefore concluded that the device disclosed in the aforementioned publication does not bring about a satisfactory solution.

### SUMMARY OF THE INVENTION

In view of the above-described circumstances, it is an object of the present invention to provide a method and a device for controlling an intake throttle valve of a diesel engine wherein the rotational speed of the engine during fuel cut can be lowered reliably with a simple control logic.

This object is accomplished according to the present invention by a method of and a device for controlling an intake throttle valve of a diesel engine as claimed in the appended claims.

In order to achieve the aforementioned object, according to a general aspect of the present invention, there is provided a method of and a device for controlling an intake throttle valve of a diesel engine wherein the intake throttle valve is driven to be opened and closed by means of control of a motor drivingly coupled to the intake throttle valve of the diesel engine. The gist of this method and device is that the target opening degree of the intake throttle valve is set closer to a valve-closing side when it is determined based on an opening degree of an accelerator that the engine is brought into a deceleration state than when the engine is at idle. The gist of this method is that the target opening degree of the intake throttle valve is set closer to a valve-closing side when a fuel injection amount command value that is set based on an opening degree of an accelerator of the engine becomes equal to or smaller than 0 than when the engine is at idle.

Furthermore, according to a second aspect of the present invention, there is also provided a method of controlling an intake throttle valve of a diesel engine wherein the intake throttle valve is driven to be opened and closed by means of control of a motor drivingly coupled to the intake throttle valve of the diesel engine. The gist of this method is that the target opening degree of the intake throttle valve is set closer to the valve-closing side when the accelerator becomes fully closed during the travelling of a vehicle fitted with the engine than when the engine is at idle.

In addition, in the first and second aspects of the present invention, the target opening degree of the intake throttle valve to be set during the idling of the engine and the target opening degree of the intake throttle valve to be set closer to the valve-closing side can be set respectively as predetermined constants.

According to a third aspect of the present invention, there is provided a device for controlling an intake throttle valve of a diesel engine wherein an intake throttle valve is driven to be opened or closed based on control of a motor drivingly coupled to the intake throttle valve of the diesel engine. The gist of this device is that it includes injection amount command value calculating means for calculating a fuel injection amount command value based on an opening degree of an accelerator of the engine, first target opening degree setting means for setting an opening degree of the intake throttle valve when the engine is at idle, and second target opening degree setting means for setting, when the calculated fuel injection amount command value is equal to or smaller than 0, a target opening degree of the intake throttle valve to a value that is closer to a valve-closing side of the intake throttle valve than the target opening degree set by the first target opening degree setting means.

According to a fourth aspect of the present invention, there is provided a device for controlling an intake throttle valve of a diesel engine wherein an intake throttle valve is driven to be opened or closed based on control of a motor drivingly coupled to the intake throttle valve of the diesel engine. The gist of this device is that it includes accelerator opening degree detecting means for detecting an opening degree of an accelerator of the engine, first target opening degree setting means for setting an opening degree of the intake throttle valve when the engine is at idle, and second target opening degree setting means for setting, when the accelerator opening degree detecting means detects that the accelerator is fully closed during travelling of a vehicle fitted with the engine, a target opening degree of the intake throttle valve to a value that is closer to a valve-closing side of the intake throttle valve than the target opening degree set by the first target opening degree setting means.

In addition, in the third and fourth aspects of the present invention, the aforementioned first and second target opening degree setting means may be designed to set the respective target opening degrees as predetermined constants.

According to the first and third aspects of the present invention, during deceleration of the engine from a high speed range or the like, the target opening degree of the intake throttle valve is set closer to the valve-closing side when the fuel injection amount command value is equal to or smaller than 0 than when the engine is at idle, so that the amount of intake air is substantially reduced. By thus restricting the amount of intake air, it becomes possible to reliably lower the rotational speed of the engine with a simple control logic. The target opening degree of the intake valve is set differently depending on whether the engine is in a process of deceleration or at idle, whereby it becomes possible to ensure an appropriate amount of intake air during the idling of the engine, to inhibit a deterioration in emission performance, and to effectively abate noise and vibration generated by the engine.

According to the second and fourth aspects of the present invention, the accelerator is fully closed during the travelling of the vehicle, so that the amount of intake air can be reduced substantially. That is, if the accelerator is fully closed during the travelling of the vehicle according to the driver's intention, the rotational speed of the engine can be lowered reliably with a simple control logic. The target opening degree of the intake valve is set differently depending on whether the engine is in a process of deceleration or at idle, whereby it becomes possible to ensure an appropriate amount of intake air during the idling of the engine, to inhibit a deterioration in emission performance, and to effectively abate noise and vibration generated by the engine.

Furthermore, in the first through fourth aspects of the present invention, the target opening degree of the intake throttle valve to be set when the engine is at idle and the target opening degree of the intake throttle valve to be set when the fuel injection amount command value is equal to or smaller than 0 or when the accelerator is fully closed can be set respectively as predetermined constants. In this case, it is possible to reliably control the opening degree of the intake throttle valve with a much simpler control logic.

### BRIEF DESCRIPTION OF THE DRAWINGS

The foregoing and further objects, features and advantages of the present invention will become apparent from the following description of a preferred embodiment with reference to the accompanying drawings, wherein:
Fig. 1 is a skeleton diagram showing the overall structure of a diesel engine to which a valve mechanism of a step motor type according to one embodiment of the present invention is applied;
Fig. 2 is a side sectional view showing the structure of an intake throttle valve and its driving mechanism;
Fig. 3 is a front view showing the structure of the driving mechanism of the intake throttle valve;
Fig. 4 is a partial sectional view of the driving mechanism of the intake throttle valve;
Fig. 5 is a block diagram showing an electric circuit pattern of the valve mechanism according to the embodiment of the present invention;
Fig. 6 is a front sectional view of the step motor;
Fig. 7 is a side sectional view of the step motor;
Fig. 8 is a skeleton diagram showing a model structure of the step motor;
Fig. 9 is a skeleton diagram showing a model structure of the step motor;
Fig. 10 is a skeleton diagram showing an operational principle of the step motor;
Fig. 11 is a skeleton diagram showing an operational principle of the step motor;
Fig. 12 shows electrical conduction states of respective coils of the step motor;
Fig. 13 is a flowchart of a routine composed of a series of processings for calculating the target opening degree of the intake throttle valve;
Fig. 14 is a flowchart of a routine composed of a series of processings for calculating the correction value;
Fig. 15 is a map for calculating the fuel injection amount based on the rotational speed of the engine and the opening degree of an accelerator; and
Fig. 16 is a map for calculating the target step and the opening degree of the intake throttle valve based on the rotational speed of the engine and the fuel injection amount.

### DETAILED DESCRIPTION OF THE PREFERRED EMBODIMENT

An intake throttle valve control device according to a preferred embodiment of the present invention will now be described in detail.

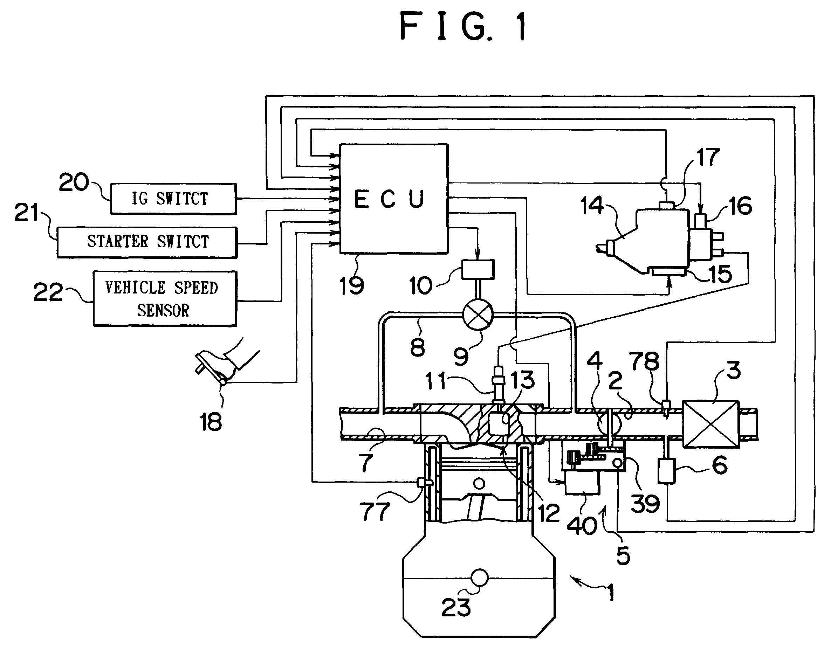

First of all, a diesel engine fitted with the intake throttle valve control device of this embodiment will be described in brief with reference to Fig. 1.

A diesel engine 1 has a combustion chamber 12 that is connected to an intake passage 2 through an intake valve (not shown). An air cleaner 3 for filtering intake air, a pressure sensor 6 for detecting the pressure of intake air, an intake air temperature sensor 78 for detecting the temperature of intake air, and an intake throttle valve 4 for adjusting the amount of intake air introduced into the combustion chamber 12 are sequentially disposed in the intake passage 2 from its upstream-side to its downstream-side.

The intake throttle valve 4 is driven to be opened and closed by a driving mechanism 5, which is essentially composed of a step motor 40 and a plurality of gears drivingly coupling the step motor 40 to the intake throttle valve 4. The step motor 40 is drivingly controlled by a control means in the form of an electronic control unit (hereinafter referred to as the "ECU") 19, which is designed to perform various types of control for the diesel engine 1. The driving mechanism 5 is provided with a full-open switch 39 that is turned on when the intake throttle valve 4 is opened beyond a predetermined position in the vicinity of its fully-open position.

On the other hand, an EGR (exhaust gas recirculation) passage 8 is connected to the intake passage 2 at a location further downstream of the intake throttle valve 4. The EGR passage 8 branches off from an exhaust passage 7 and then leads to the intake passage 2. The exhaust passage 7 is connected to the combustion chamber 12 through an exhaust valve (not shown). The EGR passage 8 is provided with an EGR control valve 9, which is driven to be opened and closed by an actuator such as a diaphragm. This actuator is controlled by the ECU 19. The intake throttle valve 4 and the EGR control valve 9 adjust the amount of intake air and the amount of EGR respectively, so that the ratio of the amount of EGR to the amount of intake air introduced into the combustion chamber 12, i.e., the EGR rate can be set arbitrarily. In other words, EGR control can be performed suitably over the entire operational range of the diesel engine 1.

A subsidiary chamber 13 of the diesel engine 1 is provided with an injection nozzle 11 for fuel injection. The fuel injection nozzle 11 is connected to a fuel injection pump 14, which is driven by rotation of an output shaft 23 of the diesel engine 1 and supplies pressurised fuel to the injection nozzle 11. Also, the fuel injection pump 14 is provided with a timer control valve 15 and a spill valve 16, which adjust the injection timing and the injection amount of fuel to be injected from the injection nozzle 11. The ECU 19 also controls operations of the timer control valve 15 and the spill valve 16.

The fuel injection pump 14 has therein a rotor (not shown) and a rotational speed sensor 17. The rotor rotates in synchronism with the output shaft of the diesel engine 1. The rotational speed sensor 17 is composed of an electromagnetic pick-up that detects a protrusion formed on an outer peripheral surface of the rotor and outputs a pulse signal corresponding to the rotational speed of the rotor. The ECU 19 takes in an output from the rotational speed sensor 17, as a signal useful for calculating the rotational speed of the diesel engine 1.

In addition to information on the atmospheric pressure detected by the pressure sensor 6 and information on the intake air temperature detected by the intake air temperature sensor 78, the ECU 19 also takes in information on the accelerator opening degree detected by an accelerator opening degree sensor 18 (information on the operation state of the engine represented by the depression amount of an accelerator pedal), information on the on-off state of an IG (ignition) switch 20, information on the coolant temperature detected by a coolant temperature sensor 77, and information on the vehicle speed detected by a vehicle speed sensor 22.

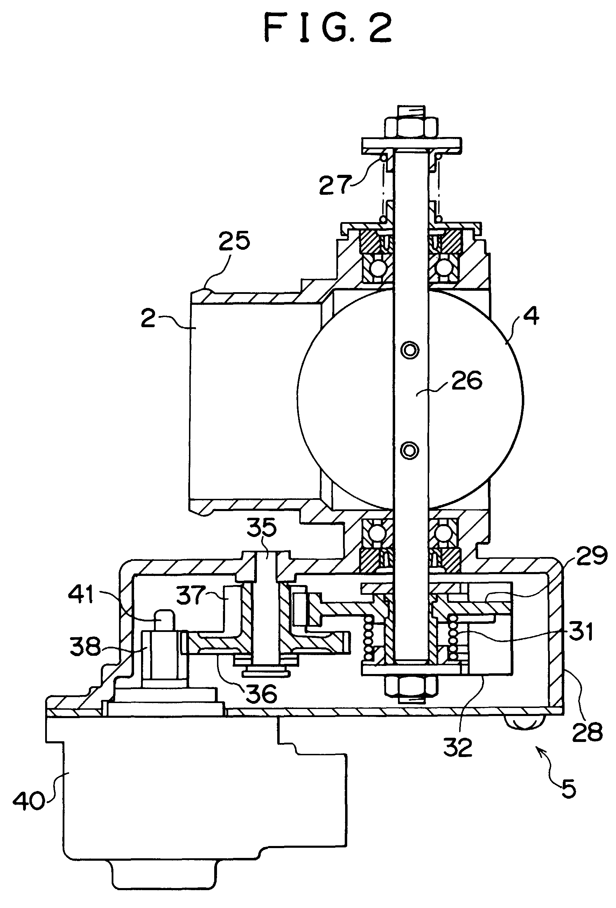

The driving mechanism 5 for opening and closing the intake throttle valve 4 will now be described in detail with reference to Figs. 2 through 4.

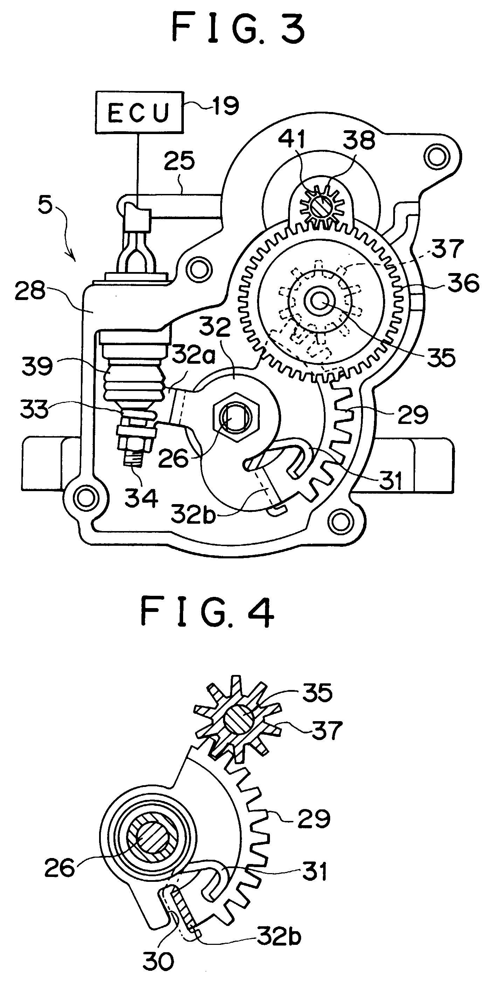

Fig. 2 is a sectional view showing the structure of the intake throttle valve 4 and the driving mechanism 5. Fig. 3 is a front view showing the structure of the driving mechanism 5. Fig. 4 is a partial sectional view showing a driven gear 29 and its peripheral components provided in the driving mechanism 5.

As shown in Fig. 2, the intake throttle valve 4 is fixed to a valve shaft 26 such that they can rotate integrally. The intake throttle valve 4 changes the opening area of the intake passage 2 and adjusts the amount of intake air flowing therethrough. The valve shaft 26 is rotatably supported by a throttle body 25, which leads to the intake passage 2. The valve shaft 26 is coupled at its one end (the upper end in Fig. 2) to the throttle body 25 through a return spring 27. The return spring 27 urges the valve shaft 26 and the intake throttle valve 4 in the valve-opening direction thereof.

On the other hand, the driven gear 29 is attached to the other end (the lower end in Fig. 2) of the valve shaft 26 such that they can rotate integrally. The driven gear 29 is provided in a gear box 28 mounted to the throttle body 25. The driven gear 29 is in engagement with a second intermediate gear 37, which is rotatably supported by a support shaft 35 provided in the gear box 28. A first intermediate gear 36, which rotates integrally with the second intermediate gear 37, is also attached to the support shaft 35. The first intermediate gear 36 is in engagement with a drive gear 38. The drive gear 38 is attached to an output shaft 41 of the step motor 40 mounted to the gear box such that the drive gear 38 and the output shaft 41 can rotate integrally. In other words, the rotation of the output shaft 41, which is driven by the step motor 40, is transmitted to the valve shaft 26 through the drive gear 38, the first intermediate gear 36, the second intermediate gear 37 and the driven gear 29. The intake throttle valve 4 is driven to be opened and closed due to rotation of the valve shaft 26.

As shown in Fig. 3, a lever 32 having two arm portions 32a, 32b is rotatably mounted to the valve shaft 26. The lever 32 is coupled to the driven gear 29 through a relief spring 31. Due to an urging force of the relief spring 31, the lever 32 is urged counterclockwise in Fig. 3 with respect to the driven gear 29. One of the arm portions 32b of the lever 32 is bent into an L-shape and extended towards the driven gear 29. As shown in Fig. 4, a leading end section of the arm portion 32b is in engagement with a groove portion 30 formed in the driven gear 29. The lever 32 can rotate relative to the driven gear 29 by a distance corresponding to a gap between the groove portion 30 and the leading end section of the arm portion 32b. Due to an urging force of the relief spring 31, the leading end section of the arm portion 32b normally abuts on a lateral wall that is located on the counterclockwise side with respect to the valve shaft 26 of the groove portion 30. In this state, the driven gear 29 and the lever 32 rotate integrally.

A leading end section of the other arm portion 32a of the lever 32 is provided with a pressing portion 33, which can abut on the full-open switch 39 provided in the gear box 28. When the intake throttle valve 4 assumes its fully-open position, the pressing portion 33 comes into close contact with the full-open switch 39, thereby turning it on. In this embodiment, even after the intake throttle valve 4 has reached the aforementioned fully-open position, it can further rotate in the same direction. When the intake throttle valve 4 assumes the fully-open position, the opening area of the intake passage 2 reaches its maximum. If the intake throttle valve 4 is driven further in the valve-opening direction, its opening movement is eventually restricted by a stopper (not shown). It is defined herein that the intake throttle valve 4 assumes its maximum opening position when its opening movement is restricted by the stopper.

Furthermore, the leading end section of the arm portion 32a has an abutment portion 34 on the side opposite to the pressing portion 33, i.e., on the closing side of the intake throttle valve 4. The abutment portion 34 comes into close contact with an inner wall of the gear box 28 immediately before the intake throttle valve 4 assumes its fully-closed position, thereby restricting rotation of the lever 32 in the valve-closing direction of the intake throttle valve 4. It is defined herein that the intake throttle valve 4 assumes its fully-closed position when the opening area of the intake passage 2 reaches its minimum, i.e., 0. The driven gear 29 can further rotate beyond the fully-closed position in the valve-closing direction of the intake throttle valve 4. If the driven gear 29 rotates further in the valve-closing direction from a position where the lever 32 is prevented from rotating due to the abutment of the abutment portion 34, it is urged in the valve-opening direction by an urging force of the relief spring 31. In this state, if the intake throttle valve 4 is driven further in the valve-closing direction, its closing movement is also eventually restricted by a stopper (not shown) or the like. It is defined herein that the intake throttle valve 4 assumes its minimum opening position when its closing movement is restricted by the stopper. It is to be noted that the minimum opening position is different from the aforementioned fully-closed position.

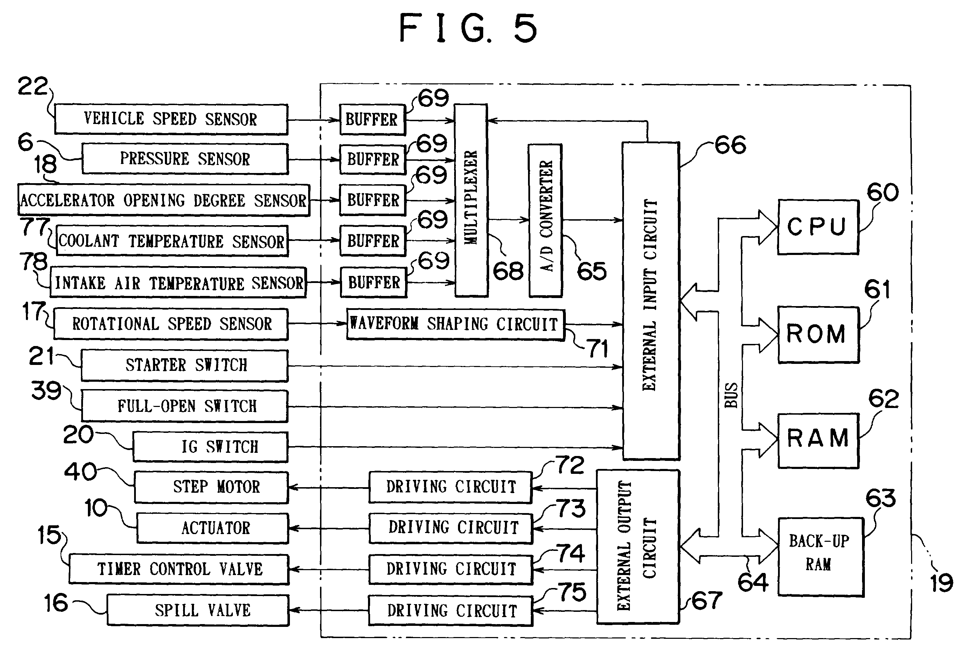

An electric circuit pattern representing a control system of the diesel engine 1 will now be described with reference to a block diagram shown in Fig. 5.

The ECU 19 is provided with a read-only memory (ROM) 61 storing therein various control programs for controlling fuel injection amount, fuel injection timing, EGR, intake air amount and the like of the diesel engine 1 and a map or the like for calculating values corresponding to various conditions. The ECU 19 is also provided with a central processing unit (CPU) 60 for carrying out various processings based on the programs stored in the ROM 61, a random access memory (RAM) 62 for temporarily storing processing results obtained from the CPU 60 and data inputted from respective sensors or the like, a back-up RAM 63 for holding necessary data even when the supply of electricity to the ECU 19 is cut off, and the like. The CPU 60, the ROM 61, the RAM 62 and the back-up RAM 63 are interconnected by one another through a bus 64, and are also connected to external input and output circuits 66, 67.

On the other hand, in the ECU 19, input signals from the pressure sensor 6, the accelerator opening sensor 18, the coolant temperature sensor 77 and the intake air temperature sensor 78 are temporarily stored in buffers 69. The input signals stored in the buffers 69 are selected by a multiplexer 68 one after another based on commands from the CPU 60, converted into digital signals by an A/D converter 65 and then transmitted to the external input circuit 66. A pulse-like input signal from the rotational speed sensor 17 is converted into a binary number by a waveform shaping circuit 71 and then transmitted to the external input circuit 66. Furthermore, the external input circuit 66 also receives information on respective on-off states of an IG switch 20, a starter switch 21 and the full-open switch 39. The IG switch 20 is a switch for controlling the starting and stopping of the diesel engine 1. The IG switch 20 is turned on when the engine is started, and it is turned off when the engine is stopped. The starter switch 21 is a switch for driving a starter motor for starting the engine. The starter switch 21 is turned on when the starter motor is in rotation, and it is turned off when the starter motor is stopped.

On the other hand, a driving circuit 72 of the step motor 40, a driving circuit 73 of an actuator for driving the EGR control valve 9 to open or close it, a driving circuit 74 of the timer control valve 15 of the fuel injection pump 14, and a driving circuit 75 of the spill valve 16 of the fuel injection pump 14 are connected to the external output circuit 67. The driving circuits 72 through 75 receive command signals based on processing results obtained from the CPU 60. Based on these command signals, the driving circuits 72 through 75 drive the step motor 40, the actuator 10, the timer control valve 15 and the spill valve 16 respectively.

The step motor 40 will now be described.

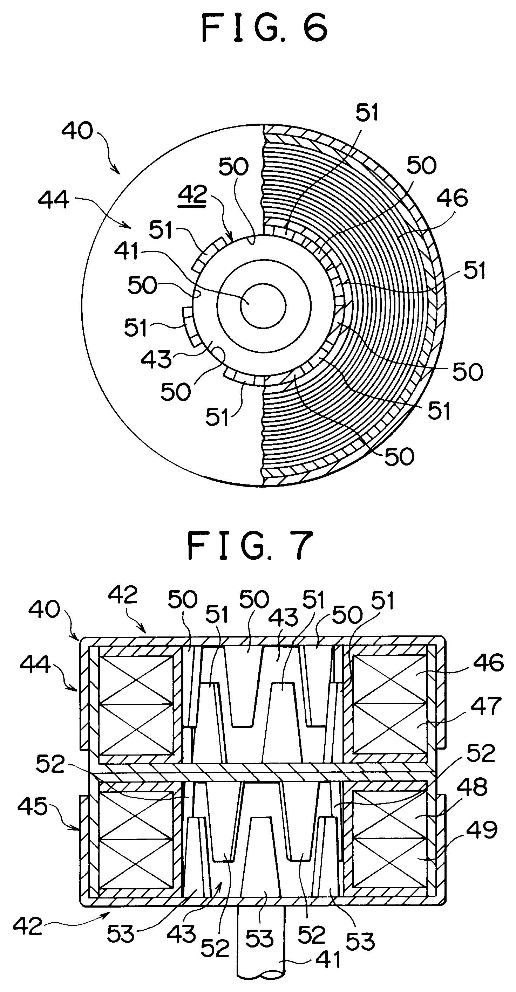

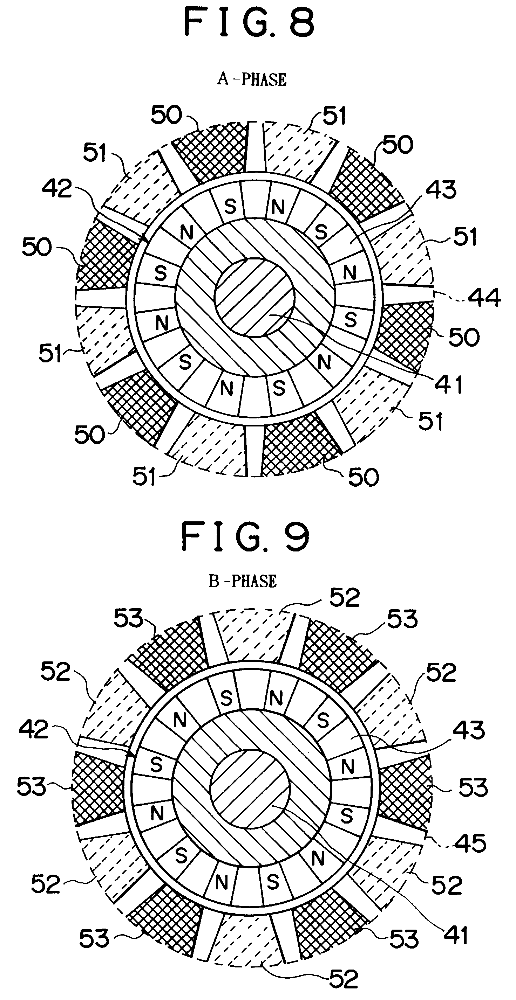

Fig. 6 is a front sectional view of the step motor 40. Fig. 7 is a side sectional view of the step motor 40. As shown in these figures, the step motor 40 is essentially composed of a rotor 42 and two stator cups, that is, an A-phase stator cup 44 and a B-phase stator cup 45. The rotor 42 is capable of rotating integrally with the output shaft 41. The two stator cups 44, 45 are disposed so as to surround the rotor 42. A permanent magnet 43 is provided on an outer peripheral surface of the rotor 42 such that they can rotate integrally. As can be seen from schematic sectional views of the step motor 40 shown in Figs. 8, 9, the permanent magnet 43 has N and S magnetic poles arranged alternately at intervals of a predetermined angle.

On the other hand, as shown in Figs. 6, 7, each of the A-phase and B-phase stator cups 44, 45 has a ring-like shape and accommodates the rotor 42 rotatably in a hollow space thereof. Each of the A-phase and B-phase stator cups 44, 45 has therein a pair of coils. That is, the A-phase stator cup 44 has an Ap-phase coil 46 and an An-phase coil 47, and the B-phase stator cup 45 has a Bp-phase coil 48 and a Bn-phase coil 49. The coils 46 through 49 are wound in a single direction.

As shown in Figs. 8, 9, upper and lower teeth 50, 51 and upper and lower teeth 52, 53 are formed alternately along respective inner circumferences of the hollow spaces of the A-phase and B-phase stator cups 44, 45 where the rotor 42 is accommodated. The upper and lower teeth 50, 51 and the upper and lower teeth 52, 53 are arranged respectively at intervals of the same predetermined angle as the N and S magnetic poles of the permanent magnet 43 of the rotor 42. The upper teeth 50, 52 and the lower teeth 51, 53 are excited upon application of a voltage to the coils 46 through 49. The teeth 50, 51 formed on the A-phase stator cup 44 are offset from the teeth 52, 53 formed on the B-phase stator cup 45 respectively by half of the aforementioned predetermined angle, i.e., by an amount corresponding to half of each of the teeth.

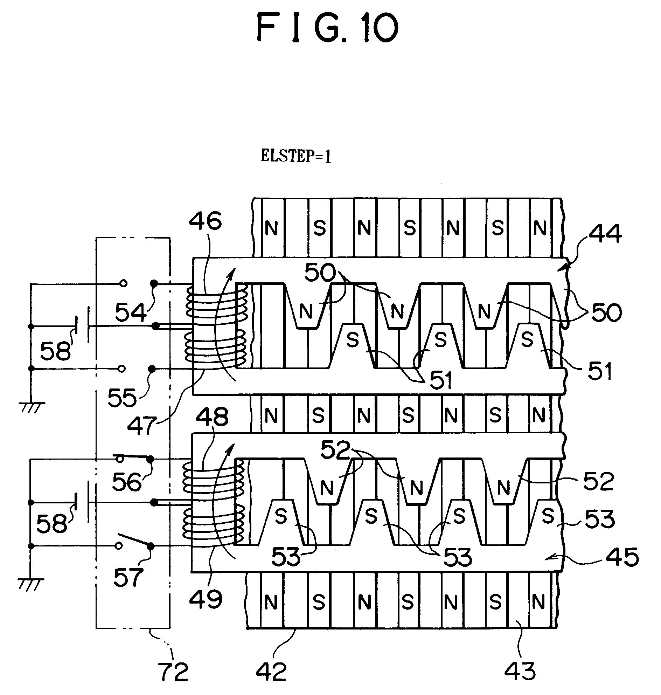

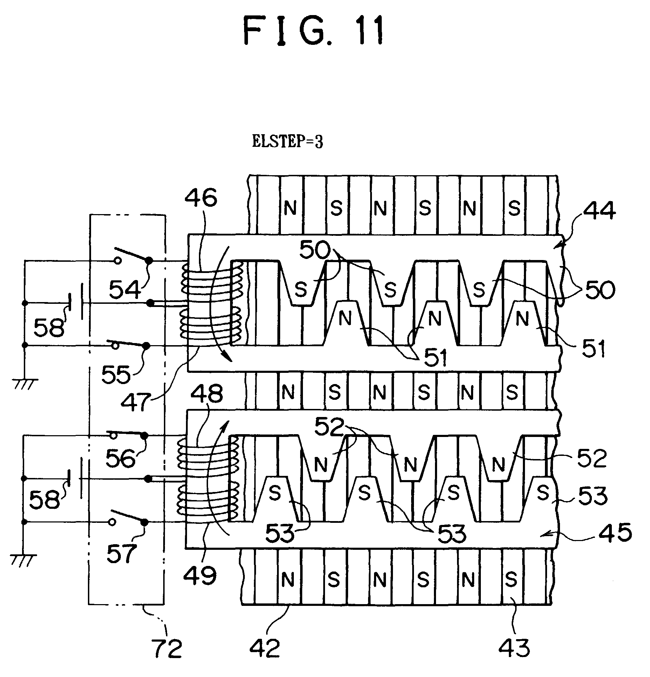

The step motor 40 and the electric circuit pattern of the driving circuit 72 will now be described with reference to Figs. 10, 11. Each of Figs. 10, 11 schematically shows, in a planar development state, the relationship between an outer circumferential portion of the rotor 42 of the step motor 40 and inner circumferential portions of the stator cups 44, 45. In order to make the function of the driving circuit 72 easier to understand, Figs. 10, 11 show the electric circuit pattern thereof also in a simplified manner.

A DC power source 58 applies a voltage to the Ap-phase coil 46 and the An-phase coil 47 that are provided in the A-phase stator cup 44. The driving circuit 72 is provided with an Ap-phase coil switch 54 and an An-phase coil switch 55 that allow or prohibit application of a voltage to the coils 47, 48. By turning the coil switches 54, 55 on, a voltage is applied to the coils 47, 48 respectively, so that the upper and lower teeth 50, 51 are excited respectively. As described above, the coils 47, 48 are wound in the same direction. However, as can be seen from Figs. 10, 11, the coils 47, 48 are designed such that electric currents flow therethrough in opposite directions. Accordingly, the upper and lower teeth 50, 51 are excited into different poles depending on whether a voltage is applied to the Ap-phase coil 46 or the An-phase coil 47. That is, when a voltage is applied to the Ap-phase coil 46, the upper and lower teeth 50, 51 are excited into N and S poles respectively. On the other hand, when a voltage is applied to the An-phase coil 47, the upper and lower teeth 50, 51 are excited into S and N poles respectively.

The B-phase stator cup 45 also employs the same electric circuit pattern. By switching on-off states of the Bp-phase coil switch 56 and the Bn-phase coil switch 57, a voltage is selectively applied to the coil 48 or the coil 49. Upon application of a voltage to the Bp-phase coil 48, the upper and lower teeth 52, 53 are excited into N and S poles respectively. Upon application of a voltage to the Bn-phase coil 49, the upper and lower teeth 52, 53 are excited into S and N poles respectively.

The operation principle of the step motor 40, which is driven by the driving circuit 72, will now be described with reference to Figs. 10 through 12.

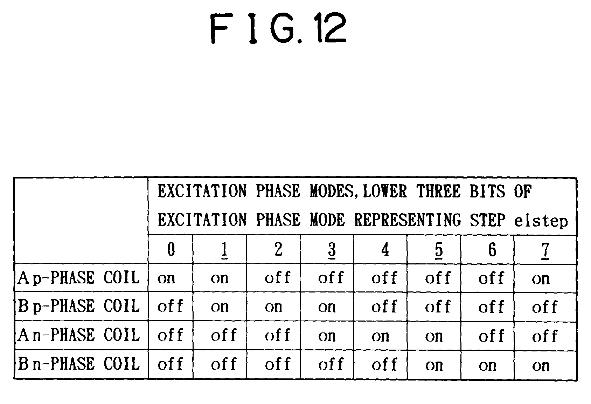

The driving circuit 72 operates based on a command signal from the CPU 60. The driving circuit 72 applies a voltage either to one of the coils 46, 47 of the A-phase stator cup 44 and one of the coils 48, 49 of the B-phase stator cup 45 simultaneously or to one of the coils 46 through 49 of the stator cups 44, 45. Fig. 12 shows electrical conduction states of the coils 46 through 49 of the step motor 40.

The driving circuit 72 rotates the step motor 40 by selectively switching eight excitation phase modes 0 through 7, which are shown in Fig. 12. As is apparent from Fig. 12, in the excitation phase modes of odd numbers, a voltage is applied to one of the coils 46, 47 of the stator cup 44 and one of the coils 48, 49 of the stator cup 45 simultaneously. On the other hand, in the excitation phase modes of even numbers, a voltage is applied to only one of the coils 46 through 49.

Fig. 10 shows a state of the step motor 40 and the driving circuit 72 in the excitation phase mode 1 shown in Fig. 12 (the lower three bits of elstep = 1) . In this state, the driving circuit 72 closes the Ap-phase coil switch 54 and the Bp-phase coil switch 56 and applies voltages to the Ap-phase coil 46 and the Bp-phase coil 48. By applying a voltage to the coils 46, the upper and lower teeth 50, 51 of the A-phase stator cup 44 are excited into N and S poles respectively. Likewise, the upper and lower teeth 52, 53 of the B-phase stator cup 45 are excited into N and S poles respectively. In this state, the S pole of the permanent magnet 43 of the rotor 42 is attracted by the upper teeth 50 of the A-phase stator cup 44 and the upper teeth 52 of the B-phase stator cup 45, which have been both excited into N poles, and is drawn to an intermediate position between the upper teeth 50, 52. Similarly, the N pole of the permanent magnet 43 of the rotor 42 is attracted by the lower teeth 51 of the A-phase stator cup 44 and the lower teeth 53 of the B-phase stator cup 45, which have been both excited into S poles, and is drawn to an intermediate position between the lower teeth 51, 53. Hence, the rotor 42 is rotated such that the S pole of the permanent magnet 43 assumes the intermediate position between the upper teeth 50, 52 and that the N pole of the permanent magnet 43 assumes the intermediate position between the lower teeth 51, 53.

If the excitation phase mode is thereafter shifted from the mode 1 to the mode 3, the switches of the driving circuit 72 are set so as to apply voltages to the An-phase coil 47 and the Bp-phase coil 48, as shown in Fig. 12. Fig. 11 shows a state of the step motor 40 and the driving circuit 72 in the excitation phase mode 3 (the lower three bits of elstep = 3). In this state, the upper and lower teeth 50, 51 of the A-phase stator cup 44 are excited into S and N poles respectively. The upper and lower teeth 52, 53 of the B-phase stator cup 45 are excited into N and S poles respectively. Thus, the S pole of the permanent magnet 43 of the rotor 42 is drawn to an intermediate position between the lower teeth 51 of the A-phase stator cup 44 and the upper teeth 52 of the B-phase stator cup 45, which have been both excited into N poles. Similarly, the N pole of the permanent magnet 43 is drawn to an intermediate position between the upper teeth 50 of the A-phase stator cup 44 and the lower teeth 53 of the B-phase stator cup 45. Hence, the rotor 42 is rotated rightwards in Fig. 11 by an amount corresponding to half of each of the teeth, and the output shaft 41 is rotated clockwise by half of the aforementioned predetermined angle. Referring to the construction of this embodiment shown in Figs. 10, 11, the intake throttle valve 4 is closed and opened due to rightward and leftward rotation of the output shaft 41 (the rotor 42) respectively.

As described hitherto, the driving circuit 72 is designed to rotate the output shaft 41 of the step motor 40 by switching the excitation phase modes from one to another. More specifically, the output shaft 41 is rotated to open the intake throttle valve 4 by switching the excitation phase modes in the descending order, and the output shaft 41 is rotated to close the intake throttle valve 4 by switching the excitation phase modes in the ascending order.

In the control device of this embodiment, the step motor 40 is rotated by selectively using two different excitation methods. According to one of the methods, the excitation phase mode is increased or decreased in number one by one. More specifically, the aforementioned excitation phase modes are shifted either in order of the mode 0, the mode 1, and the mode 2 (continued) or in order of the mode 2, the mode 1, and the mode 0 (continued). In other words, the step motor 40 is rotated by alternately switching between a mode where only one coil is excited and a mode where two coils are simultaneously excited. This method will be referred to hereinafter as a one-two phase excitation method. According to the other method, only odd-numbered excitation phase modes are switched either in the ascending order or in the descending order, i.e., either in order of the mode 1, the mode 3 and the mode 5 (continued) or in order of the mode 5, the mode 3 and the mode 1 (continued). In other words, the step motor 40 is rotated only using a mode where two coils are simultaneously excited. This method will be referred to hereinafter as a two phase excitation method. The one-two phase excitation method makes it possible to finely set the rotational angle of the rotor 42 of the step motor 40 in switching the excitation phase modes from one to another, thereby enabling precise control of the opening degree of the intake throttle valve 4. On the other hand, the two phase excitation method makes it possible to enlarge the rotational angle of the rotor 42 in switching the excitation phase modes from one to another, thereby increasing the speed at which the intake throttle valve 4 is opened or closed. By selecting these two excitation methods depending on circumstances, it becomes possible to achieve precision and quick response in controlling the opening degree of the intake throttle valve 4.

In controlling the opening degree of the intake throttle valve 4 according to this embodiment using the one-two phase excitation method, it is defined that the step motor 40 is rotated by a rotational angle of one step when the excitation phase modes are switched from one to another. Therefore, in the case of the two phase excitation method, the step motor 40 is rotated by two steps every time the excitation phase modes are switched from one to another.

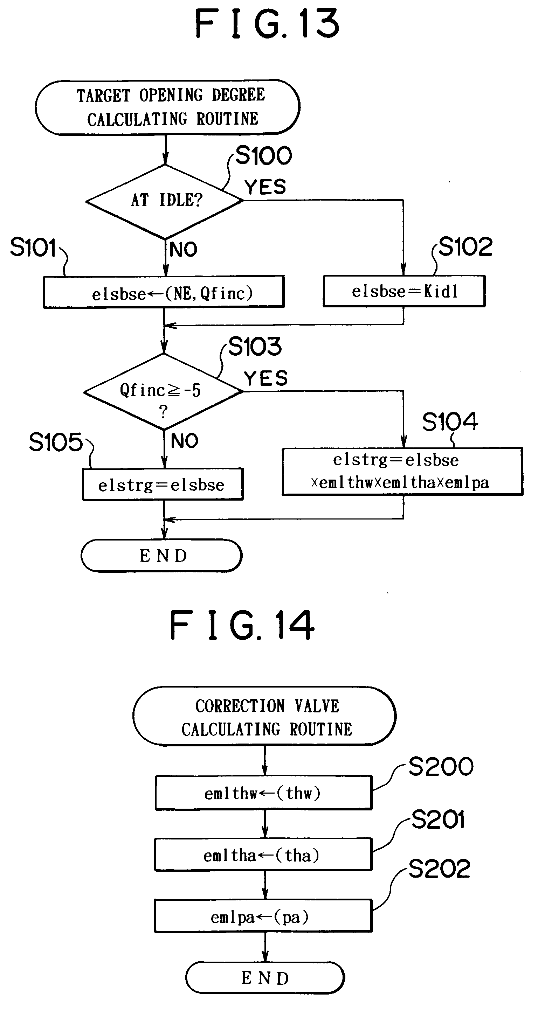

The opening degree control of the intake throttle valve 4 according to this embodiment will now be explained in detail with reference to Figs. 13 through 16.

In this embodiment, the opening degree of the intake throttle valve 4 is controlled based on the operational amount thereof, which is calculated from the number of steps of the step motor 40 in a driven state. In performing such control, it is necessary to grasp the relationship between each step position of the step motor 40 and the actual opening degree of the intake throttle valve 4. However, a malfunction in the step motor 40 or power cutoff during a standstill of the diesel engine 1 may inadvertently alter such relationship. Hence, this embodiment is designed to perform an initialization processing for initializing the aforementioned relationship prior to the control of the opening degree of the intake throttle valve 4, so as to correct any possible deviation from the right relationship.

First of all, the initialization processing will be described.

Upon start of the initialization processing, the CPU 60 first confirms whether the full-open switch 39 has been turned on or off. The CPU 60 then drives the step motor 40 in such a direction as to change the on-off state of the full-open switch 39. The step position assumed by the step motor 40 when the on-off state of the switch 39 has been changed is set as a reference step position.

In the step position assumed by the step motor 40 when the on-off state of the full-open switch 39 has been changed, the reference step position is set by storing the current step value elsact as "0" and the corresponding excitation phase mode value as an offset value elsof. The current step elsact is increased by corresponding steps when the step motor 40 is driven in the valve-closing direction of the intake throttle valve 4. On the other hand, the current elsact is decreased by corresponding steps when the step motor 40 is driven in the valve-opening direction of the intake throttle valve 4. Because the current step value elsact is thus increased or decreased in accordance with the opening degree of the intake throttle valve 4, the opening degree thereof can be obtained from the current step value. The offset value elsof represents the excitation phase mode value of the step motor 40 when the intake throttle valve 4 assumes its fully-open position. In drivingly controlling the opening degree of the intake throttle valve 4, the excitation phase representing step elstep, which is a sum of the thus-set current step elsact and the offset value elsof, is used. The lower three bit values (0 through 7) represent the excitation phase mode value of the step motor 40 corresponding to the current step elsact.

The driving control of the step motor 40, which is performed in controlling the opening degree of the intake throttle valve 4 after completion of the aforementioned initialization processing, will now be described.

In drivingly controlling the step motor 40, the CPU 60 first confirms whether the current step elsact is greater or smaller than the target step elstrg, thereby determining in which direction the step motor 40 is to be driven. If the current step elsact is greater than the target step elstrg, the step motor 40 is driven in the valve-opening direction of the intake throttle valve 4. If the current step elsact is smaller than the target step elstrg, the step motor 40 is driven in the valve-closing direction of the intake throttle valve 4. If the current step elsact is equal to the target step elstrg, the intake throttle valve 4 assumes a target opening degree. Hence, the excitation phase of the step motor 40 is left as it is, so as to maintain the current opening degree of the intake throttle valve 4.

The CPU 60 also determines a method of driving the step motor 40. As described previously, the step motor 40 of this embodiment can be driven either according to the one-two phase excitation method where the step motor 40 is driven by one step every time the excitation phase modes are switched from one to another, or according to the two phase excitation method where the step motor 40 is driven by two steps every time the excitation phase modes are switched from one to another. In this embodiment, the step motor 40 is normally driven according to the two phase excitation method. Only when the step motor 40 is currently being subjected to one phase excitation and when the current step elsact is different from the target step elstrg by "one" step, the step motor 40 is driven according to the one-two phase excitation method.

After the driving direction and the driving method of the step motor 40 have been thus set, the CPU 60 changes the current step elsact. Each time the step motor 40 is driven in the valve-opening direction of the intake throttle valve 4, the current step elsact is decreased by "1" or "2", depending on a driving method to be adopted. Likewise, each time the step motor 40 is driven in the valve-closing direction of the intake throttle valve 4, the current step elsact is increased by "1" or "2", depending on a driving method to be adopted.

In this manner, the step motor 40 is drivingly controlled such that the current step elsact approaches and eventually coincides with the target step elstrg. The intake throttle valve 4 is controlled so as to achieve its target opening degree.

A target opening degree calculating routine, which is composed of a series of processings for calculating the target opening degree (the target step elstrg), will now be described with reference to Fig. 13. This routine is carried out as interruption processings (based on time synchronization) at regular intervals of a predetermined time period (e.g., 8msec).

Upon start of this routine, the CPU 60 first determines in step S100 whether or not the diesel engine 1 is at idle. It is determined that the diesel engine 1 is at idle on the condition that the vehicle speed detected by a vehicle speed sensor 20 is 0, that the rotational speed of the diesel engine 1 is equal to or lower than a predetermined value, and that the accelerator is fully closed.

When the diesel engine 1 is at idle, the CPU 60 sets in step S102 the base value elsbse of the target step to a constant Kidl, and proceeds to step S103. The constant Kidl is preliminarily set to a value corresponding to a predetermined opening degree of the intake throttle valve 4 that is located on the throttled-side. This predetermined opening degree makes it possible to abate noise and vibration generated by the diesel engine 1 during its idling and to suitably inhibit a deterioration in emission performance as well as generation of black or white smoke.

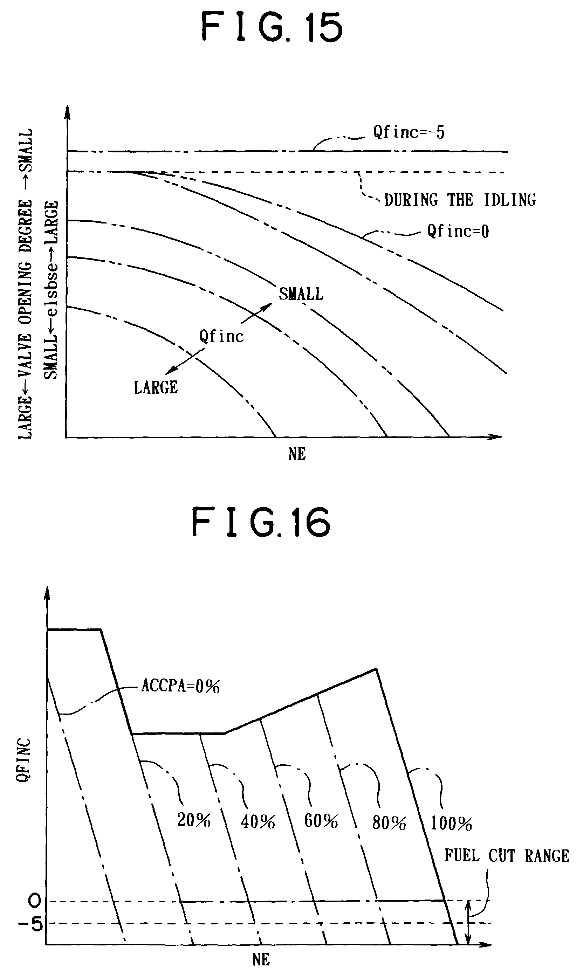

On the other hand, when the diesel engine 1 is not at idle, the CPU 60 calculates in step S101 the base value elsbse of the aforementioned target step using a two-dimensional map shown in Fig. 15, which represents the relationship between the rotational speed NE and the fuel injection amount Qfinc. The fuel injection amount Qfinc is calculated using a two-dimensional map representing the relationship between the rotational speed NE of the diesel engine 1 and the accelerator opening degree ACCPA. Fig. 16 shows a map for calculating the fuel injection amount Qfinc in this embodiment.

For example, in the case where fuel injection is suspended (so-called fuel cut is performed) when the engine 1 rotates at a high speed, the calculation result indicates that the fuel injection amount Qfinc assumes a negative value. As long as fuel cut is performed, it does not make any difference whether the fuel injection amount Qfinc assumes "0" or a negative value. However, in calculating the target step elstrg of the step motor 40 according to this embodiment, the opening degree of the intake throttle valve 4 is controlled differently depending on whether the fuel injection amount Qfinc assumes "0" or a negative value.

More specifically, as shown in Fig. 15, when the fuel injection amount Qfinc assumes a negative value "-5" in this embodiment, the base value elsbse of the target step is set to a value greater than the base value elsbse of the target step during the idling of the diesel engine 1. In this embodiment, the greater the base value elsbse becomes, the further the target opening degree of the intake throttle valve 4 is shifted in the valve-closing direction. Therefore, the opening degree of the intake throttle valve 4 corresponds more closely to the closed state thereof during fuel cut than during the idling of the diesel engine 1. The target opening degree of the intake throttle valve 4 is set such that even if a malfunction in the fuel injection system, the inclusion of oil in intake air and the like maintain a combustion state during fuel cut and thereby causes a rise in rotational speed of the diesel engine 1 contrary to the driver's intention, the rotational speed can be decreased reliably. In this case, the rotational speed of the diesel engine 1 is decreased by reducing the amount of intake air to such an extent that even the remaining oil or the like cannot maintain the combustion state.

After the base value elsbse of the target step has been thus set, the CPU determines in step S103 whether or not the fuel injection amount Qfinc is greater than the aforementioned value of "-5". If the fuel injection amount Qfinc is greater than "-5", the CPU 60 obtains in step S104 the target step elstrg by multiplying the base value elsbse of the target step by a coolant temperature correction factor emlthw, an intake air temperature correction factor emltha and an atmospheric pressure correction factor emlpa. These correction factors are set using a correction value calculating routine, which will be explained below.

Preferably, the target opening degree of the intake throttle valve 4 is set based on the fuel injection amount Qfinc and the amount of EGR. In other words, the target opening degree of the intake throttle valve 4 is a function of the fuel injection amount Qfinc and the amount of EGR. In this case, the amount of EGR itself is also a function of the fuel injection amount Qfinc. Accordingly, the target opening degree of the intake throttle valve 4 can be set as a function of the fuel injection amount Qfinc. In this embodiment, the target opening degree of the intake throttle valve 4 can be calculated suitably and easily from the fuel injection amount Qfinc.

If the fuel injection amount Qfinc is equal to or smaller than "-5", the CPU 60 then adopts in step S105 the base value elsbse of the target step directly as the target step elstrg. In other words, if the fuel injection amount Qfinc is equal to or smaller than "-5", for example, when the accelerator pedal is fully closed during fuel cut, the base value elsbse itself is employed as the target step elstrg without making any corrections thereto. Besides, as is apparent from the map shown in Fig. 15, the base value elsbse is greater during fuel cut than during the idling of the diesel engine 1.

When the rotational speed of the diesel engine 1 drops from a high speed, fuel injection thereto is suspended with a view to preventing a catalyst from being heated, cutting down on fuel consumption, and avoiding any damage that may be caused to the diesel engine 1 due to an abnormal rise in rotational speed NE thereof. This is what is called fuel cut. In the case where the rotational speed NE of the diesel engine 1 is decreased solely on the basis of fuel cut, a malfunction in the fuel injection system, the inclusion of oil in intake air and the like maintain a combustion state even during fuel cut, which causes a sharp rise or a considerably slow fall in rotational speed NE of the diesel engine 1 contrary to the driver's intention.

However, according to this embodiment, if the fuel injection amount Qfinc is equal to or smaller than the aforementioned value of "-5", for example, when the accelerator pedal is fully closed during fuel cut, the target step elstrg is set such that the opening degree of the intake throttle valve 4 is further shifted in the valve-closing direction as compared with the opening degree thereof during the idling of the engine. In this manner, the amount of intake air is substantially reduced, so that the rotational speed NE of the diesel engine 1 drops smoothly and effectively. Thus, the rotational speed NE of the diesel engine 1 can be controlled sufficiently, whereby it becomes possible to inhibit the engine from operating contrary to the driver's intention when the accelerator is fully closed.

After the target step elstrg has been thus set, this routine is terminated temporarily. In performing the aforementioned driving control of the step motor 40, the CPU 60 drives the step motor 40 based on the thus-set target step elstrg, thereby adjusting the opening degree of the intake throttle valve 4.

A series of processings according to the correction value calculating routine will now be described with reference to a flowchart shown in Fig. 14.

This routine is carried out as interruption processings at regular intervals of a predetermined time period (e.g., 1sec). In this routine, the respective correction factors are set based on the temperature of the diesel engine 1, the atmospheric temperature and the atmospheric pressure. The temperature of the diesel engine 1, the atmospheric temperature and the atmospheric pressure fluctuate less drastically than the operational state of the diesel engine 1. For this reason, this routine is carried out much less frequently than the aforementioned target opening degree calculating routine.

Upon start of this routine, the CPU 60 calculates first in step S200 the coolant temperature correction factor emlthw using a one-dimensional map of the coolant temperature thw obtained from outputs from the coolant temperature sensor 77. The lower the coolant temperature thw becomes, the smaller the coolant temperature correction factor emlthw becomes. In other words, the coolant temperature correction factor emlthw is set so as to increase the opening degree of the intake throttle valve 4 in proportion to a fall in the coolant temperature thw. The coolant temperature thw reflects the temperature of the diesel engine 1. When the diesel engine 1 rotates at a low speed, there is a fair possibility of the occurrence of misfiring. Hence, when the coolant temperature thw is low, the opening degree of the intake throttle valve 4 is set large so as to reduce the ratio of the amount of EGR to the amount of intake air, i.e., the EGR rate and to stop the occurrence of misfiring.

Then, the CPU 60 calculates in step S201 the intake air temperature correction factor emltha using a one-dimensional map of the intake air temperature tha obtained from outputs from the intake air temperature sensor 78. The lower the intake air temperature tha becomes, the smaller the intake air temperature correction factor emltha becomes. In other words, the intake air temperature correction factor emltha is set so as to increase the opening degree of the intake throttle valve 4 in proportion to a fall in the intake air temperature tha. When the intake air temperature tha is low, there is a fair possibility of misfiring occurring in the diesel engine 1. Hence, the amount of intake air is increased and the aforementioned correction is made so as to prevent misfiring.

Then, the CPU 60 calculates in step S202 the atmospheric pressure correction factor emlpa using a one-dimensional map of the atmospheric pressure Pa obtained from outputs from the pressure sensor 6. The lower the atmospheric pressure Pa becomes, the smaller the atmospheric pressure correction factor emlpa becomes. In other words, the atmospheric pressure correction factor emlpa is set so as to increase the opening degree of the intake throttle valve 4 in proportion to a fall in the atmospheric pressure Pa. In the case where the atmospheric pressure Pa is low, for example, when the diesel engine 1 operates at a high altitude, intake air has a low density. Therefore, the amount of intake air introduced into the combustion chamber 12 substantially drops, thus resulting in a deterioration in intake air charging efficiency and an increase in concentrations of smoke and HC in exhaust gas. Hence, the amount of intake air is increased and the aforementioned correction is made so as to reduce concentrations of smoke and HC.

After the respective correction factors have been thus set, the CPU 60 terminates this routine temporarily. As described above, these correction factors are used to correct the target step elstrg only when the fuel injection amount Qfinc is equal to or greater than -5.

In the case where the fuel injection amount Qfinc is smaller than -5, for example, when the accelerator is fully closed during fuel cut, fuel injection to the combustion chamber 12 is suspended. Therefore, it is useless to make the aforementioned corrections based on the coolant temperature thw, the intake air temperature tha and the atmospheric pressure Pa. Besides, such corrections even have a possibility of making the opening degree of the intake throttle valve 4 greater than a value that has been set to reduce the rotational speed of the diesel engine 1, and may cause a delay in reduction of the rotational speed NE. While the diesel engine 1 is in a process of deceleration, a high priority is to be placed on reduction of the rotational speed NE of the diesel engine 1. Hence, this embodiment is designed not to make such corrections in calculating the target step elstrg during deceleration of the diesel engine 1, so as to reduce the amount of intake air reliably.

Furthermore, as for the intake throttle valve 4 of this embodiment, the opening degree to be set during the idling or during normal opening degree control is different from the opening degree to be set during deceleration of the diesel engine 1, that is, during fuel cut. Hence, it is always possible to set a suitable opening degree of the intake throttle valve 4 independently of individual circumstances.

As described hitherto, this embodiment makes it possible to achieve the following advantages.

While the diesel engine 1 is in a process of deceleration, for example, when the accelerator is fully closed during fuel cut, the opening degree of the intake throttle valve 4 is set much smaller than it is when the diesel engine 1 is at idle, for the purpose of substantially reducing the amount of intake air. Thus, with a simple control logic, it becomes possible to reliably prevent the diesel engine 1 from operating contrary to the driver's intention due to a malfunction in the fuel injection system, the inclusion of oil in intake air and the like.

During deceleration of the diesel engine 1, the target step elstrg is not subjected to any corrections based on the coolant temperature thw, the intake air temperature tha and the atmospheric pressure Pa. Therefore, the opening degree of the intake throttle valve 4 can be always made small, whereby it becomes possible to reduce the rotational speed NE of the engine reliably.

By reliably lowering the rotational speed of the diesel engine 1 during fuel cut, it becomes possible to maintain a high reliability and a high durability of the diesel engine 1.

The opening degree of the intake throttle valve 4 is set differently depending on whether the diesel engine 1 is in a process of deceleration or at idle, whereby it becomes possible to set a suitable opening degree that matches the operational state of the diesel engine 1.

The target step elstrg is calculated based on the fuel injection amount Qfinc and the rotational speed of the diesel engine 1, so that EGR control, idle speed control or engine speed control can be performed appropriately.

The target opening degree of the intake throttle valve 4 can be calculated easily and suitably from the fuel injection amount Qfinc.

In summary, a control means in the form of the ECU 19 provides a function of the injection amount command value calculating means, the first target opening degree setting means, and the determining means 18, 19 provides the function of determining the operating conditions and operation state of the diesel engine 1 by evaluating the opening degree of the accelerator.

This embodiment may be modified as follows.

In this embodiment, even if the fuel injection amount Qfinc is equal to or smaller than "-5", the target step elstrg is calculated using the same map as is used normally. However, it is also possible to prepare another map intended to calculate the target step elstrg exclusively in this case. According to the aforementioned construction, if the fuel injection amount Qfinc is equal to or smaller than "-5", the base value elsbse itself is employed as the target step elstrg without making any corrections. However, even in this case, corrections can be made as long as they do not depart from the scope of the present invention.

In this embodiment, the target step elstrg is calculated by correcting the base value elsbse based on the coolant temperature thw, the intake air temperature tha and the atmospheric pressure Pa. However, the base value elsbse can also be corrected using either only some of those parameters or an additional correction factor based on another parameter. Furthermore, it is also possible to make no corrections at all.

In this embodiment, the fuel injection amount Qfinc (=-5) can be set arbitrarily when the accelerator pedal is fully closed during fuel cut. The fuel injection amount Qfinc needs to be set so as to make a clear distinction between the case where the diesel engine 1 is at idle or in a normal state and the case where the diesel engine 1 is in a process of deceleration.

The step motor 40 employed in this embodiment is of a PM type wherein a permanent magnet is provided on the rotor 42. However, the step motor 40 may be replaced by a motor of a different type such as a VR type, a hybrid type and the like.

While the present invention has been described with reference to what is presently considered to be a preferred embodiment thereof, it is to be understood that the present invention is not limited to the disclosed embodiment or constructions. On the contrary, the present invention is intended to cover various modifications and equivalent arrangements within the scope of the appended claims.

As mentioned above, when controlling an intake throttle valve of a diesel engine, the intake throttle valve 4 is driven to be opened and closed by an electronic control unit 19 by means of step control that is performed based on a predetermined step control that is performed based on a predetermined step position of a step motor 40 drivingly coupled to the intake throttle valve 4 of the diesel engine 1. When the fuel injection amount command value, which is set based on the opening degree of an accelerator of the diesel engine 1, becomes equal to or smaller than 0, the electronic control unit 19 sets the target opening degree of the intake throttle valve 4 to a valve that is still closer to a valve-closing side than the target opening degree set during the idling of the engine 1.

In controlling an intake throttle valve of a diesel engine, the intake throttle valve (4) is driven to be opened and closed by an electronic control unit (19) by means of step control that is performed based on a predetermined step position of a step motor (40) drivingly coupled to the intake throttle valve (4) of the diesel engine (1) When the fuel injection amount command value, which is set based on the opening degree of an accelerator of the diesel engine 1, becomes equal to or smaller than 0, the electronic control unit (19) sets the target opening degree of the intake throttle valve (4) to a value that is still closer to a valve-closing side than the target opening degree set during the idling of the engine (1).

## Claims

1. A method of controlling an intake throttle valve of a diesel engine wherein the intake throttle valve (4) is driven to be opened and closed based on control of a motor (40) drivingly coupled to the intake throttle valve (4) of the diesel engine (1),
**characterized by the steps of**
determining the operation state of the diesel engine (1) by determining the opening degree of an accelerator, and
setting by a control means (19) a target opening degree of the intake throttle valve (4) closer to a valve-closing side when it is determined based on said opening degree of said accelerator that the diesel engine (1) is brought into a deceleration state than when the diesel engine (1) is at idle.

2. The method according to claim 1, characterized in that the target opening degree of the intake throttle valve (4) is set still closer to the valve-closing side when a fuel injection amount command value that is set based on an opening degree of the accelerator of the engine (1) is equal to or smaller than 0 than when the engine (1) is at idle.

3. The method according to claim 2, characterized in that the target opening degree of the intake throttle valve (4) to be set during idling of the engine (1) and the target opening degree of the intake throttle valve (4) to be set still closer to the valve-closing side are set respectively as predetermined constants.

4. The method according to claim 1, characterized in that the target opening degree of the intake throttle valve (4) is set still closer to the valve-closing side when the accelerator becomes fully closed during travelling of a vehicle fitted with the engine (1) than when the engine (1) is at idle.

5. The method according to claim 4, characterized in that the target opening degree of the intake throttle valve (4) to be set during idling of the engine (1) and the target opening degree of the intake throttle valve (4) to be set still closer to the valve-closing side are set respectively as predetermined constants.

6. A device for controlling an intake throttle valve of a diesel engine wherein an intake throttle valve (4) is driven to be opened and closed based on control of a motor (40) drivingly coupled to said intake throttle valve (4) of the diesel engine (1),
**characterized by comprising:**
means (18, 19) for determining the operation state of the diesel engine (1) by detecting the opening degree of an accelerator, and
control means (19) for setting a target opening degree of the intake throttle valve (4) closer to a valve-closing side when the determining means (18, 19) determines based on said opening degree of said accelerator that the diesel engine (1) is brought into a deceleration state than when the diesel engine (1) is at idle.

7. The device according to claim 6, characterized by further comprising:
injection amount command value calculating means for calculating a fuel injection amount command value based on an opening degree of an accelerator of the engine (1);
first target opening degree setting means for setting an opening degree of the intake throttle valve (4) when the engine (1) is at idle; and
second target opening degree setting means for setting, when the calculated fuel injection amount command value is equal to or smaller than 0, a target opening degree of the intake throttle valve (4) to a value that is closer to a valve-closing side of the intake throttle valve (4) than the target opening degree set by the first target opening degree setting means.

8. The device according to claim 7, characterized in that the first and second target opening degree setting means set the respective target opening degrees as predetermined constants.

9. The device according to claim 6, characterised by further comprising:
accelerator opening degree detecting means for detecting an opening degree of the engine (1);
first target opening degree setting means for setting an opening degree of the intake throttle valve (4) when the engine (1) is at idle; and
second target opening degree setting means for setting, when the accelerator opening degree detecting means detects that the accelerator is fully closed during travelling of a vehicle fitted with the engine (1), a target opening degree of the intake throttle valve (4) to a value that is closer to a valve-closing side of the intake throttle valve (4) than the target opening degree set by the first target opening degree setting means.

10. The device according to claim 9, characterized in that the first and second target opening degree setting means set the respective target opening degrees as predetermined constants.

11. The method according to claim 1, characterized in that the target opening degree of the intake throttle valve (4) is set still closer to the valve-closing side when fuel cut control is performed based on an opening degree of the accelerator than when the engine (1) is at idle.
